# EUROPÄISCHE PATENTSCHRIFT

(11) **EP 3 746 208 B1**
(45) Veröffentlichungstag und Bekanntmachung des Hinweises auf die Patenterteilung: **13.09.2023**
(21) Anmeldenummer: 19711534.8
(22) Anmeldetag: 11.03.2019
(51) Int. Cl.: B01D 36/02, B01D 46/00, B22F 3/105, B29C 64/00

(54) **FILTERVORRICHTUNG ZUR FILTRATION VON MIT PARTIKELN BELASTETEN GASEN**
FILTER DEVICE FOR FILTRATION OF GASES LOADED WITH PARTICLES
DISPOSITIF DE FILTRAGE POUR LE FILTRAGE DE GAZ CHARGÉS DE PARTICULES

(30) Priorität: 19.03.2018 DE 102018002314
(43) Veröffentlichungstag der Anmeldung: 09.12.2020
(73) Patentinhaber: Hydac Fluidcarecenter GmbH, 66280 Sulzbach/Saar (DE)
(72) Erfinder: KLEEMANN, Daniel, 57515 Alsting (FR); FREIDINGER, Martin, 66130 Saarbrücken (DE); WENDELS, Jörg Michael, 66123 Saarbrücken (DE); HAINKA, Christophe, 57350 Spicheren (FR); SCHNEIDER, André Michael, 66399 Mandelbachtal (DE)
(74) Vertreter: Bartels und Partner, Patentanwälte
(86) Internationale Anmeldenummer: PCT/EP2019/055951
(87) Internationale Veröffentlichungsnummer: WO 2019/179799

(56) Entgegenhaltungen:
- CN-U- 205 127 649
- DE-U1-202008 005 672

## Beschreibung

Die Erfindung betrifft eine Filtervorrichtung zur Filtration von mit Partikeln belasteten Gasen, wie von Schweißgasen, die insbesondere bei Fertigungsverfahren unter Einsatz von 3D-Druckern in einem Fertigungsraum entstehen, mit den Merkmalen im Oberbegriff von Anspruch 1.

Filtervorrichtungen dieser Art sind bekannt, vgl. DE 10 2014 206 329 A1. Die Filtration von mit Partikeln belasteten Gasen erfordert einen beträchtlichen technischen und wirtschaftlichen Aufwand, wenn eine starke Partikelbelastung vorliegt, wie dies bei Rauchgasen sehr häufig der Fall ist. Durch große Mengen von am Filtermaterial des benutzten Filterelements angelagerten Partikeln kommt es zu einem raschen Verblocken, so dass keine ausreichend langen Filterstandzeiten erreichbar sind. Verstärkt treten solche Probleme bei Rauchgasen auf, wie dem bei 3D-Druckern für Metall entstehenden Schweißrauch. Bei dem selektiven Lasersintern, wie es als SLS-Verfahren (DE 10 2015 017 026) bekannt ist, werden pulverförmige, chemisch reine Metallpartikel schichtweise aufgetragen und danach mit einem Hochleistungslaser verschmolzen. Dies erfolgt unter einer im Bauraum herrschenden Schutzgasatmosphäre aus Argon oder Stickstoff, weil die Gegenwart von Sauerstoff nicht nur die Güte des Schweißvorgangs beeinträchtigen würde, sondern wegen der damit einhergehenden Brand- und Explosionsgefahr auch ein hohes Sicherheitsrisiko darstellen würde.

Gleichermaßen kritische und gefährliche Situationen ergeben sich bei der Handhabung und Entsorgung der im Aufnahmebehälter angesammelten Partikel, die bei Kontakt mit Sauerstoff, beispielsweise aus der Umgebungsluft, explosionsartig reagieren können. Um dieser Gefahr zu begegnen, sieht die aus DE 10 2014 206 329 A1 bekannte Lösung das Abschirmen der abgeschiedenen Partikel durch Überdeckung mit nicht oxidierbaren Partikeln, beispielsweise mit Quarz, Sand oder ähnlichem vor. Zum einen ist hierdurch keine ausreichend sichere Abschirmung erreichbar und zum anderen ist es schwierig, das Material, wie Sand, ohne Lufteintrag in den Aufnahmebehälter einzubringen.

Die DE 20 2008 005 672 U1 beschreibt eine Filtervorrichtung zur Filtration von mit Partikeln belasteten Gasen, wie von Schweißgasen, die insbesondere bei Fertigungsverfahren unter Einsatz von 3D-Druckern in einem Fertigungsraum entstehen, mit einem Filterkreislauf mit mindestens einem Gasfilter, das die Partikel aus dem Gas herausfiltert, die zumindest teilweise von diesem Gasfilter in einen zuordenbaren Aufnahmebehälter gelangen, wobei die Partikel im Rahmen eines Rückspülvorganges in den jeweiligen Aufnahmebehälter gelangen, wobei mindestens ein weiterer Filterkreislauf mit mindestens einem Ölfilter vorhanden ist, der ein Öl filtert, das die aus dem Rückspülvorgang gewonnenen Partikel aufweist, und wobei das mit den Partikeln des Gasfilters verunreinigte Öl auf die Unfiltratseite des Ölfilters bringbar ist.

Eine weitere Filtervorrichtung geht aus der CN 205 127 649 U hervor.

Ausgehend von diesem Stand der Technik stellt sich die Erfindung die Aufgabe, eine Filtervorrichtung der eingangs genannten Art zur Verfügung zu stellen, die auf wirtschaftliche und besonders sichere Weise betreibbar ist.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass abgereinigtes Öl von der Filtratseite des Ölfilters in den Gasfilter bringbar ist.

Es ist vorgesehen, dass die Partikel im Rahmen eines Rückspülvorganges in den Aufnahmebehälter gelangen und dass der weitere Filterkreislauf mit dem Ölfilter vorhanden ist, der ein Öl filtert, das die aus dem Rückspülvorgang gewonnenen Partikel aufweist. Die Regenerierung des Gasfilters durch Rückspülen und die dadurch erreichbaren längeren Standzeiten ermöglichen einen wirtschaftlichen Betrieb des Filters. Dadurch, dass zusätzlich zu dem zumindest einen das Rohgas filternden Gasfilter der Filterkreislauf mit dem Ölfilter vorhanden ist, der ein die abgesonderten Partikel aufweisendes Öl filtert, sind auch die mit der Handhabung und Entsorgung der abgesonderten Partikel verbundenen Sicherheitsrisiken vermieden. Anders als beim genannten Stand der Technik, wo eine mehr oder weniger dichte Überdeckung der Partikel mit Sand oder dergleichen vorgesehen ist, sind bei der Erfindung die Partikel im Öl des weiteren Filterkreislaufs aufgenommen. In dem Öl, wie beispielsweise Weißöl, sind die Partikel vom Fluid derart umschlossen, dass der jeweilige Fluidfilter vollständig inertisiert und damit ohne Risiko handhabbar ist.

Bei vorteilhaften Ausführungsbeispielen ist für den Rückspülvorgang zumindest ein Druckspeicher vorhanden, der mittels einer Kompressoreinrichtung mit Gas vorgebbaren Druckes aufladbar ist, das von der Reinseite eines Versorgungskreises für den Fertigungsraum stammt und das in Umkehr zu der üblichen Filtrationsrichtung die Rückspülung am Gasfilter veranlasst. Dadurch ist der Rückspülvorgang unabhängig vom Systemdruck des Versorgungskreises des Fertigungsraums und damit besonders effektiv durchführbar.

Mit Vorteil ist die Anordnung so getroffen, dass an den Versorgungskreis für den Fertigungsraum mindestens ein Hauptfilter angeschlossen ist, der mit seiner Filtratseite die Reinseite am Eingang des Fertigungsraums versorgt und der mit seiner Unfiltratseite an die Filtratseite des Gasfilters angeschlossen ist.

Mit besonderem Vorteil ist die Anordnung hierbei so getroffen, dass für eine Passivierung des Aufnahmebehälters und vorzugsweise des Gasfilters Druck aus dem Druckspeicher auf mindestens einen Ölfilter ausgeübt ist, dessen von den Partikeln abgereinigtes Öl zumindest in den Aufnahmebehälter und vorzugsweise in ein Filtergehäuse des Gasfilters gelangt.

Für eine Befüllung des Aufnahmebehälters und vorzugsweise des zuordenbaren Filtergehäuses eines der Gasfilter mit Fluid ist die Anordnung mit Vorteil so getroffen, dass mittels der Kompressoreinrichtung ein Vakuum an diese Komponenten angelegt ist.

Bei besonders vorteilhaften Ausführungsbeispielen sind zwei der Gasfilter mit dem jeweils zugehörigen Aufnahmebehälter als Vorfilter vor dem Hauptfilter angeordnet, die mit ihrer Unfiltratseite an die Schmutzseite des Versorgungskreises anschließbar sind, wobei zwei Ölfilter gemeinsam an einen der Gasfilter anschließbar sind. Dadurch ist jeder Gasfilter für sich rückspülbar, so dass der Bauvorgang im Fertigungsraum ohne Unterbrechung fortsetzbar ist.

Für einen Austausch des Filterelements eines der Gasfilter ist dessen Öl aus einem zugehörigen Filtergehäuse abführbar.

Bei vorteilhaften Ausführungsbeispielen ist in den Versorgungskreis für den Fertigungsraum eine Gebläsepumpe nach dem Hauptfilter geschaltet sowie dieser Pumpe nachfolgend ein Gaskühler, wobei eine Versorgungseinrichtung vorhanden ist, die das Gas, vorzugsweise in Form eines Schutzgases, wie Stickstoff oder Argon, in den Versorgungskreis einspeist.

Nachstehend ist die Erfindung anhand der beigefügten Zeichnung im Einzelnen erläutert. Es zeigen:
- Fig. 1: in stark schematisch vereinfachter Darstellung den Fertigungsraum eines 3D-Druckers mit in Symboldarstellung gezeigtem Versorgungskreis, der mit einer erfindungsgemäßen Filtervorrichtung versehen ist;
- Fig. 2: in einer skizzenhaften und stark vereinfachten Darstellung ein Ausführungsbeispiel der erfindungsgemäßen Filtervorrichtung, wobei die fluidische Verschaltung der verschiedenen Komponenten des Ausführungsbeispiels schematisch vereinfacht gezeigt ist;
- Fig. 3: eine der Fig. 2 entsprechende Darstellung, wobei mit stark ausgezogenen Linien ein erster Betriebszustand angedeutet ist; und
- Fig. 4 bis 14: der Fig. 3 entsprechende Darstellungen eines zweiten bis zwölften Betriebszustandes.

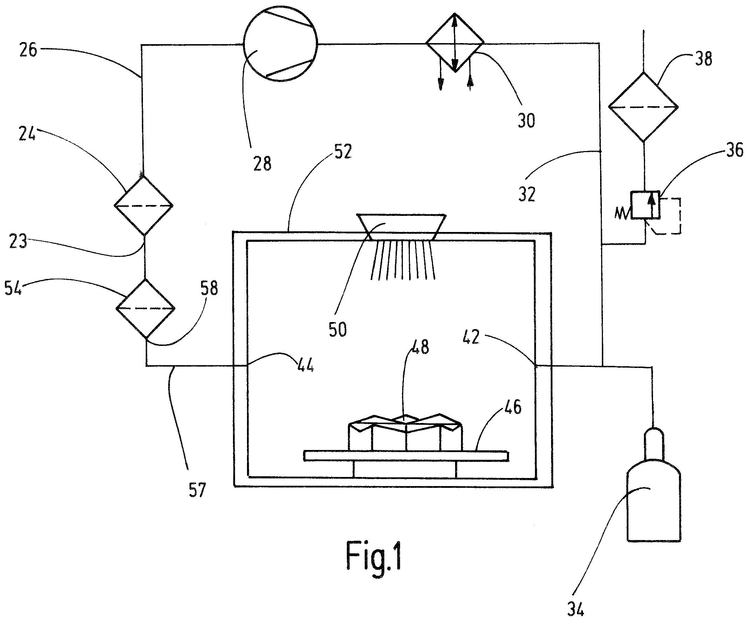

Die Fig. 1 zeigt den Versorgungskreis bei einem 3D-Drucker, der nach dem Prinzip des selektiven Lasersinterns (abgekürzt: SLS-Verfahren) arbeitet. Dabei handelt es sich um eine Art Pulverdruck, bei dem pulverförmige, chemisch reine Metallpartikel verwendet werden, die schichtweise aufgetragen und danach mit einem Hochleistungslaser unter einer Schutzgasatmosphäre verschmolzen werden. Dadurch lassen sich Metallobjekte mit sehr hoher Präzision herstellen. Der dabei entstehende Schweißrauch oder Schweißschmauch, der zusammen mit dem Schutzgas aus dem Fertigungsraum des Druckers abgeführt wird, ist in sehr starkem Maße mit Partikeln des Metallpulvers belastet. Dies führt zu einem Verblocken des Filtermaterials nach kurzen Betriebszeiten und damit zu häufigen Filterwechseln. Dem betreffenden 3D-Drucker, von dem in Fig. 1 der Fertigungsraum 52 lediglich schematisiert angedeutet ist, ist eine erfindungsgemäße Filtervorrichtung als Vorfiltereinrichtung 54 zugeordnet. Der Fertigungsraum 52 weist in der bei derartigen Druckern üblichen Weise einen absenkbaren Drucktisch 46 auf, auf dem ein Objekt 48 dadurch gebildet wird, dass aufgetragene Pulverschichten mittels der Strahlung eines Hochleistungslasers 50 verschmolzen werden. Dies geschieht unter Atmosphäre eines Schutzgases, wie Argon oder Stickstoff, das dem Fertigungsraum 52 über einen Schutzgaseingang 42 zugeführt und über einen Schutzgasausgang 49 abgeführt wird. Vom Ausgang 49 gelangt das Schutzgas zusammen mit dem beim Druckvorgang entstandenen Schweißrauch als Rohgas über eine Rohgasleitung 57 zum Rohgaseingang 58 der Vorfiltereinrichtung 54. Von dort gelangt das gefilterte Reingas über eine Reingasleitung 23 zu einem Hauptfilter 24, dessen Ausgang über eine Saugleitung 26 zu einer Gebläsepumpe 28 führt. Diese erzeugt für den Betrieb der Vorfiltereinrichtung 54 und des Hauptfilters 27 als Saugfilter einen Unterdruck.

Beim Saugfilterbetrieb gelangt das Reingas von der Gebläsepumpe 28 über einen Gaskühler 30 und eine Rückführleitung 32 zum Schutzgaseingang 42 des Fertigungsraums 52 zurück, nachdem das vom vorausgegangenen Schweißvorgang erhitzte Gas im Gaskühler 30 auf die gewünschte Arbeitstemperatur rückgekühlt ist. An der Rückführleitung 32 sind ein Schutzgas-Vorratsbehälter 34 sowie ein Druckbegrenzungsventil 36 angeschlossen. Dem als Überdrucksicherung des Versorgungskreises dienenden Druckbegrenzungsventil 36 ist ein Filter 38 für über das Ventil 36 entweichendes Gas nachgeschaltet.

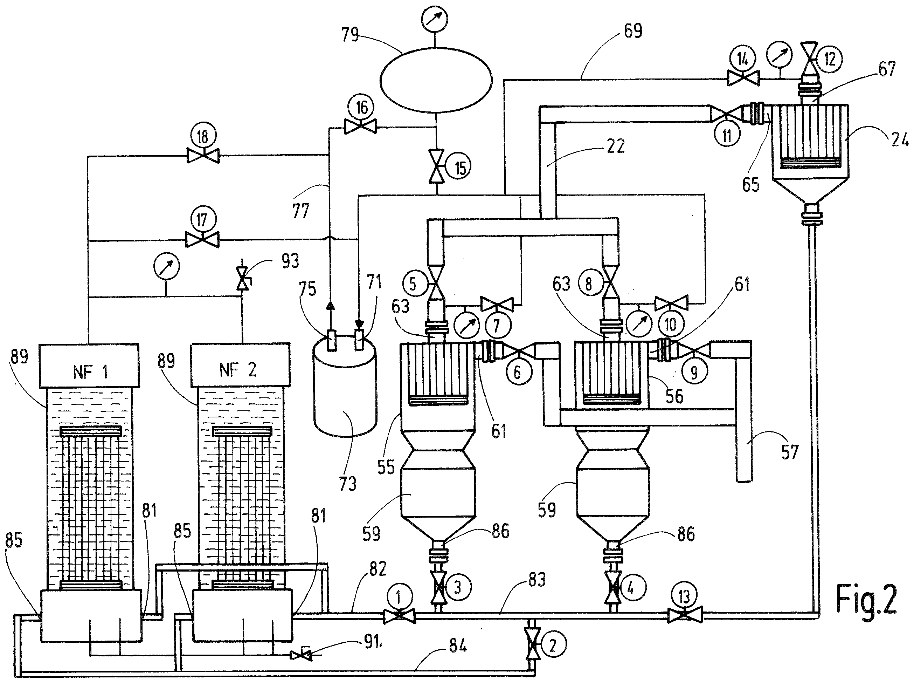

Die Fig. 2 bis 14 zeigen nähere Einzelheiten der Vorfiltereinrichtung 54. Diese weist zwei separate Vorfilter auf, von denen das erste mit 55 und das zweite mit 56 bezeichnet sind. Von der Rohgasleitung 57 her ist der Unfiltratseite 61 von erstem Vorfilter 55 und zweitem Vorfilter 56 über jeweils ein Sperrorgan 6 bzw. 9 partikelbelastetes Rohgas vom Rohgasausgang 44 des Fertigungsraums 52 zuführbar. Dabei strömt das Rohgas tangential zur Innenwand des Gehäuses der Vorfilter 55, 56 ein, so dass ein Zykloneffekt entsteht, durch den grobe, am Filtermaterial der Vorfilter 55, 56 angelagerte Schmutzpartikel abgelöst werden und nach unten in einen mit dichter Verbindung an der Unterseite der Vorfilter 55, 56 angebrachten Aufnahmebehälter 59 abfallen. Mit ihrer Filtratseite 63 sind die Vorfilter 55, 56 über ein Absperrorgan 5 bzw. 8 mit der Reingasleitung 22 in Verbindung, die über ein weiteres Absperrorgan 11 zur Schmutzseite 65 des Hauptfilters 65 führt, der als Nach- oder Feinfilter konzipiert ist. An der Filtratseite 67 des Hauptfilters 24 ist über ein Absperrorgan die Saugleitung 26 des Versorgungskreises angeschlossen, die über das in Fig. 2 bis 14 nicht gezeigte Sauggebläse 28 und den Gaskühler 30 zur Rückführleitung 32 führt, die die Reingasseite des Versorgungskreises bildet. Die Filtratseite 67 des Hauptfilters 24 ist des Weiteren über ein Absperrorgan 14 und eine Versorgungsleitung 69 mit der Saugseite 71 eines Kompressors 73 in Verbindung. Die Druckseite 75 des Kompressors 73 ist über eine Druckleitung 77 und ein weiteres Absperrorgan 16 mit einem Druckspeicher 79 in Verbindung, so dass dieser vom Kompressor 73 mit aus der Versorgungsleitung 69 stammendem Reingas aufladbar ist.

Ein zusätzlicher Nebenstrom-Filterkreislauf weist zwei mit NF1 und NF2 bezeichnete Ölfilter zur Filtration von Weißöl auf. Mit ihren Filtratseiten 81 sind die Ölfilter NF1 und NF2 über eine Zulaufleitung 82 und über ein Absperrorgan 1 mit einer Verbindungsleitung 83 verbindbar. Über ein weiteres Absperrorgan 2 und eine Rücklaufleitung 84 ist die Verbindungsleitung 83 auch mit der Schmutzseite 85 von erstem und zweitem Ölfilter NF1 und NF2 verbindbar. Über am bodenseitigen Ausgang 86 der Aufnahmebehälter 59 befindliche Absperrorgane 3 und 4 sind mit der Verbindungsleitung 83 auch die Aufnahmebehälter 59 der Vorfilter 55 und 56 verbindbar. Vervollständigt wird das System durch über ein Absperrorgan 15 ermöglichte Verbindungen des Druckspeichers 79 mit der Versorgungsleitung 69 sowie über Absperrorgane 7 und 10 auch mit den Filtratseiten 63 der Vorfilter 55 und 56. Über ein weiteres Absperrorgan 13 ist das Gehäuse des Hauptfilters 24 zur Druckentlastung mit der Verbindungsleitung 83 verbindbar. Die Filtergehäuse 89 der Ölfilter NF1 und NF2 sind über weitere Absperrorgane 17 und 18 mit der Druckleitung 77 in Verbindung. Ein Ablassventil 91 ermöglicht die Entleerung des Systems. Des Weiteren befinden sich nicht bezifferte Drucksensoren am Druckspeicher 79, am Filtergehäuse 89 der Ölfilter NF1 und NF2, an den Unfiltratseiten 61 der Vorfilter 55 und 56 sowie an der Filtratseite 67 des Hauptfilters 24.

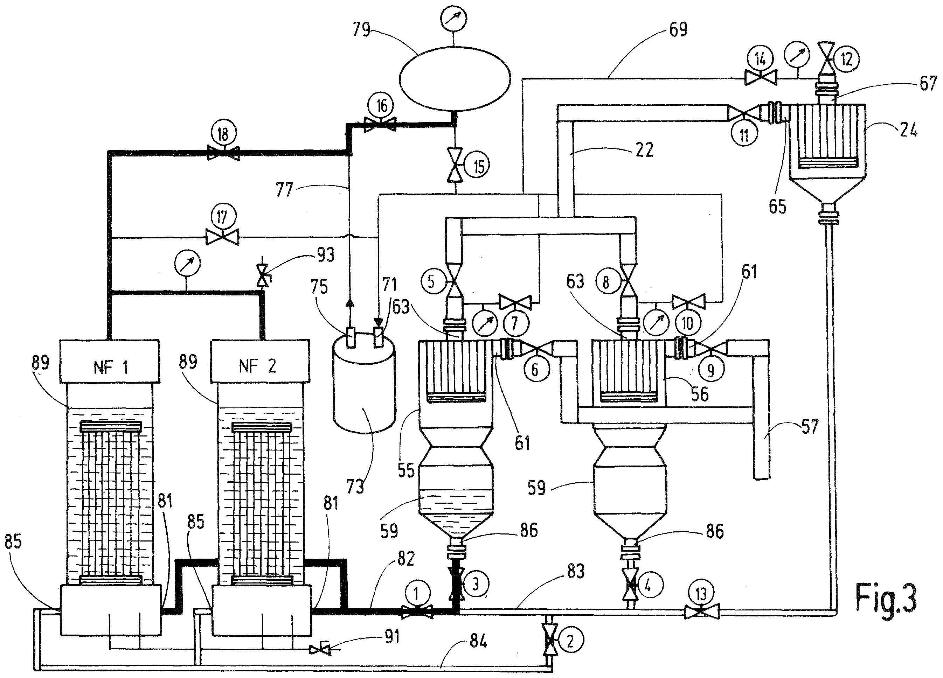

In den Fig. 3 bis 14, die unterschiedliche Betriebszustände zeigen, sind jeweils aktive Leitungsabschnitte mit dicker Linie kenntlich gemacht.

Die Fig. 3 zeigt einen Betriebszustand, bei dem von den Vorfiltern 55 und 56 das in der Figur rechts gelegene Vorfilter 56 im Filtrationsbetrieb ist, wobei die Absperrorgane 9 und 8 geöffnet sind, so dass Unfiltrat tangential ins Gehäuse des Vorfilters 56 einströmt. Der sich ergebende Zykloneffekt hat eine reinigende Wirkung, die die Verschmutzung der Gehäusewand durch anhaftende Partikel verhindert. Das Filtrat tritt über das geöffnete Absperrorgan 8 aus und gelangt über die Reingasleitung 22 und das geöffnete Absperrorgan 11 zum Hauptfilter 24. Die Absperrorgane 6 und 5 am ersten Vorfilter 55 sind hierbei geschlossen. Gleichzeitig sind über die geöffneten Absperrorgane 16 und 18 die Gehäuse 89 der Ölfilter NF1 und NF2 mit Druck aus dem Druckspeicher 79 beaufschlagt, und die Absperrorgane 1 und 3 sind geöffnet. Der sich nicht im Filtrationsbetrieb befindende Vorfilter 55 wird dadurch von der Filtratseite 81 der Ölfilter NF1 und NF2 her in seinem Aufnahmebehälter 59 mit Weißöl befüllt.

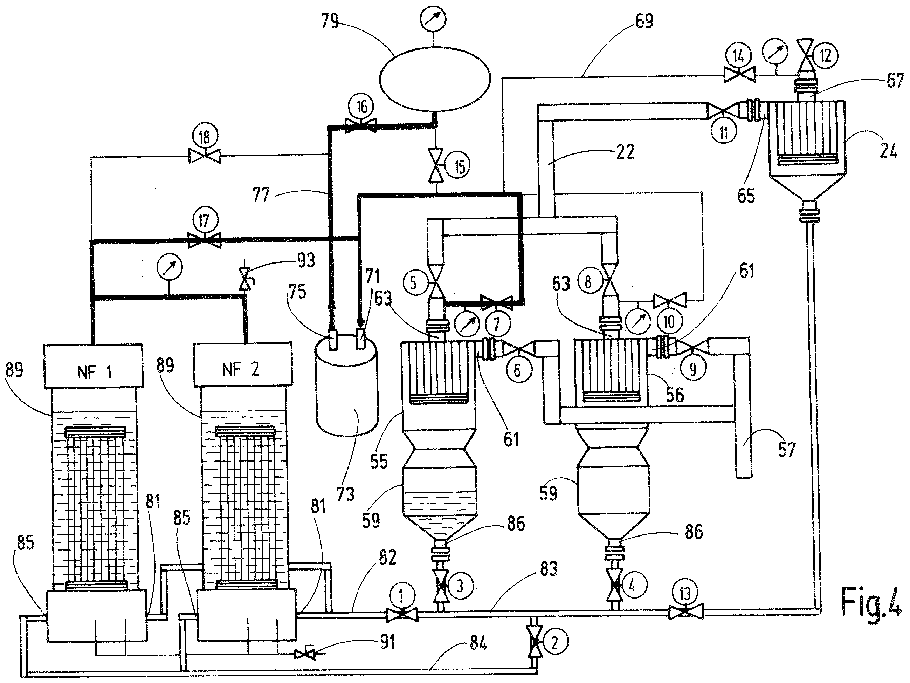

Als nächster Schritt bei dem in Fig. 4 dargestellten Betriebszustand, bei dem weiterhin der zweite Vorfilter 56 im Filtrationsbetrieb ist, wird der bei der Befüllung des Aufnahmebehälters 59 des ersten Vorfilters 55 entstandene Überdruck in den Ölfiltern NF1 und NF2 und im Vorfilter 55 abgebaut. Bei geschlossenem Absperrorgan 5 am Vorfilter 55 wird das Absperrorgan 7 an dessen Filtratseite 63 geöffnet. Bei geschlossenem Absperrorgan 15 ist dadurch die Filtratseite 63 mit der Saugseite 71 des Kompressors 73 verbunden. Gleichzeitig sind die Gehäuse 89 der Ölfilter NF1 und NF2 über das geöffnete Absperrorgan 7 ebenfalls mit der Saugseite 71 des Kompressors 71 verbunden, während die Druckseite des Kompressors 73 über das geöffnete Absperrorgan 16 mit dem Druckspeicher 79 in Verbindung ist. Bei laufendem Kompressor 73 sind dadurch die Ölfilter NF1, NF2 und der Vorfilter 55 druckentlastet.

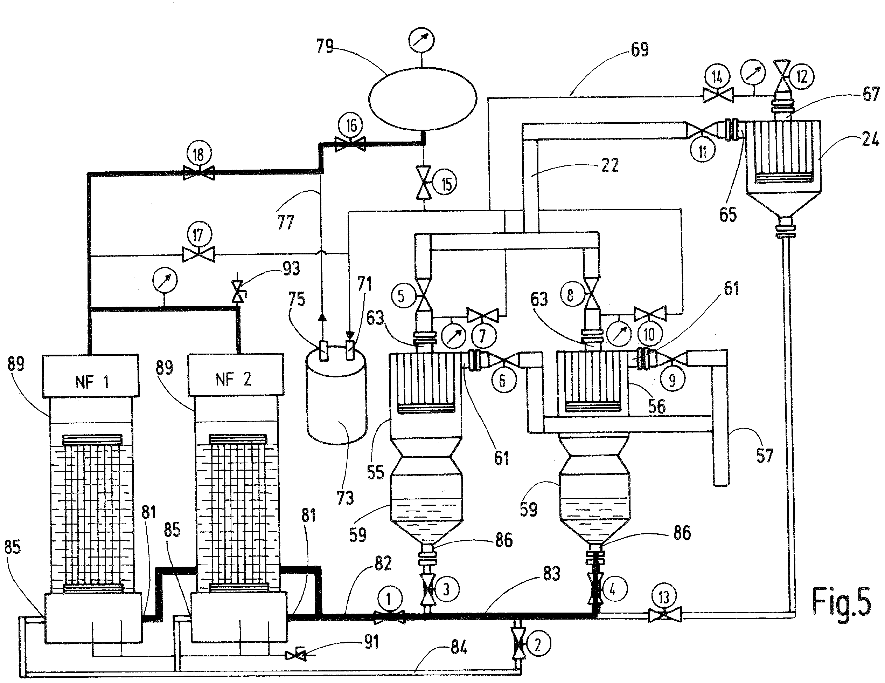

Bei dem weiteren Betriebszustand von Fig. 5, bei dem ebenfalls lediglich der zweite Vorfilter 56 im Filtrationsbetrieb ist, wird auch dessen Aufnahmebehälter 59 mit Öl befüllt. Durch die geöffneten Absperrorgane 16 und 18 sind die Gehäuse 89 der Ölfilter NF1 und NF2 wiederum druckbeaufschlagt, so dass bei geöffneten Absperrorganen 1 und 4 der Aufnahmebehälter 59 des zweiten Vorfilters 56 befüllt wird, während die Absperrorgane 6 und 5 am ersten Vorfilter 55 geschlossen sind.

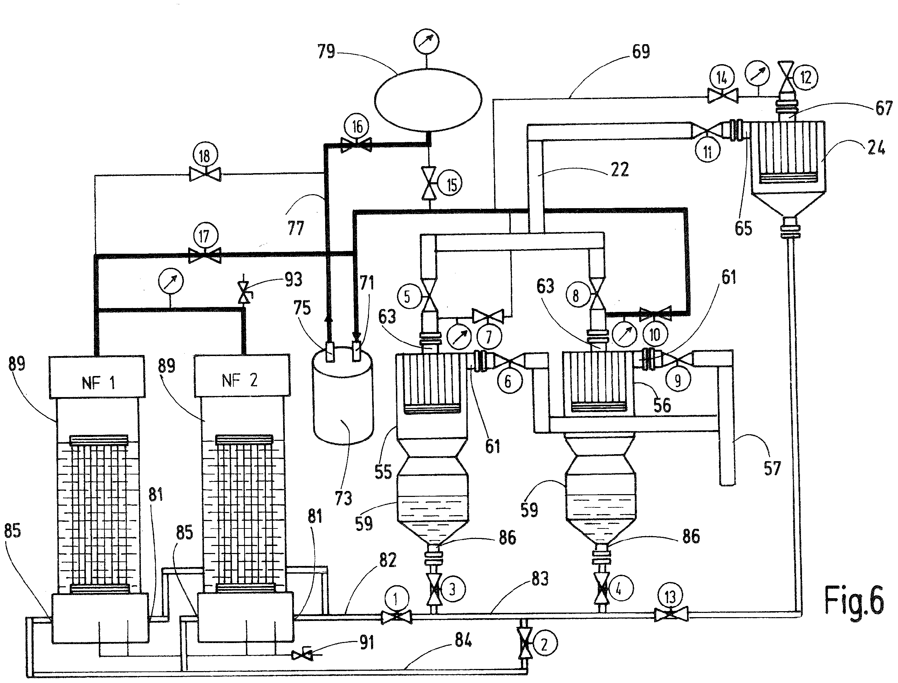

Fig. 6 zeigt den Betriebszustand, bei dem, in Entsprechung zu dem Betriebszustand der Fig. 4, wiederum der Überdruck aus den Ölfiltern NF1 und NF2 entfernt und auch der Überdruck im zweiten Vorfilter 55 entfernt wird. Hierfür ist das Absperrorgan 10 an der Filtratseite 63 des Vorfilters 56 geöffnet, wie auch, bei arbeitendem Kompressor 73, die Absperrventile 16 und 17 offen sind.

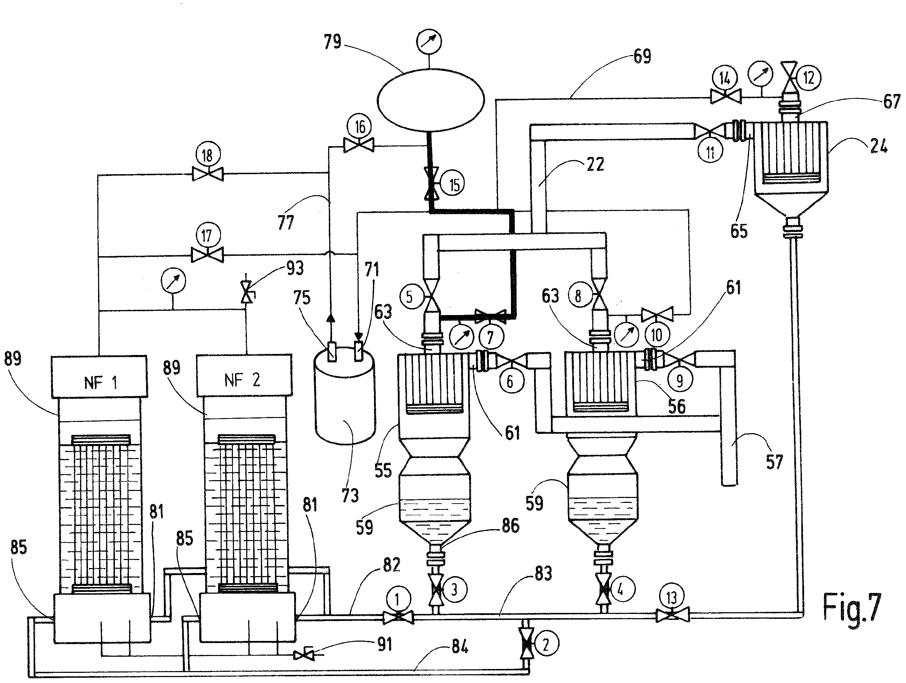

Fig. 7 zeigt den weiteren Betriebszustand, bei dem der zweite Vorfilter 56 weiterhin im Filtrationsbetrieb ist, während gleichzeitig der erste Vorfilter 55 rückgespült wird. Hierbei sind das Absperrorgan 7 am ersten Vorfilter 55 sowie das Absperrorgan 15 am Druckspeicher 79 offen, so dass das Reingas aus dem Speicher 79 über die Filtratseite 63 des Vorfilters 55 in einem Druckimpuls durch das Filtermaterial des Vorfilters 55 rückströmt. Bei einem Speicherdruck im Bereich von beispielsweise 6 bar erfolgt dabei eine effektive Abreinigung.

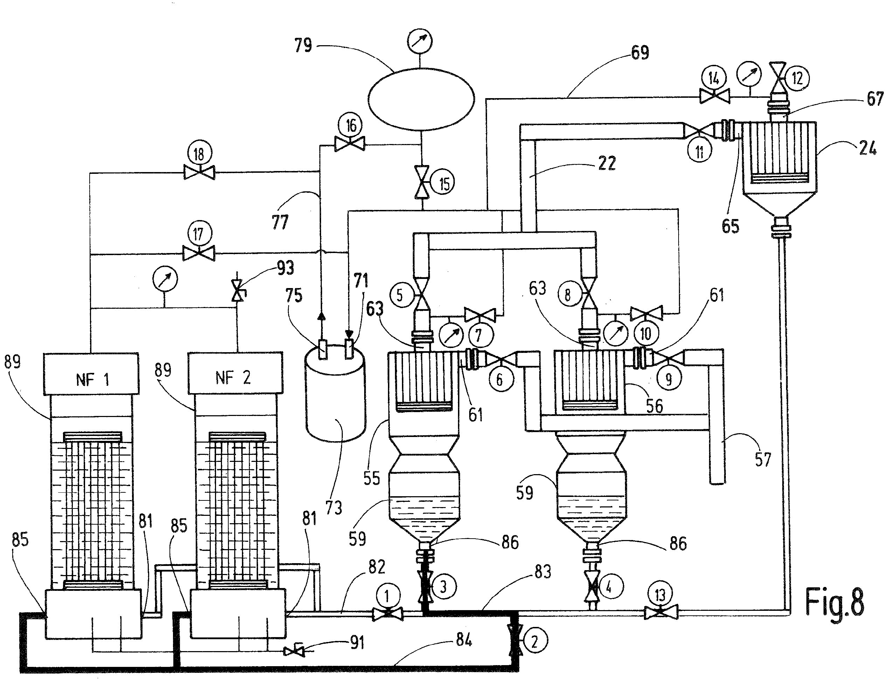

Bei dem weiteren Zustand von Fig. 8, bei dem der zweite Vorfilter 56 weiterhin im Filtrationsbetrieb ist, sind das Absperrorgan 3 am Aufnahmebehälter 59 des ersten Vorfilters 55 sowie das Absperrorgan 2 an der Verbindungsleitung 83 offen. Durch den beim vorausgegangenen Rückspülvorgang im Vorfilter 55 herrschenden Druck wird dadurch die Ölfüllung im Aufnahmebehälter 59, die die beim Rückspülen abgereinigten Partikel aufweist, zu den Ölfiltern NF1, NF2 zurückgedrückt, so dass der Aufnahmebehälter 59 des ersten Vorfilters 55 entleert wird.

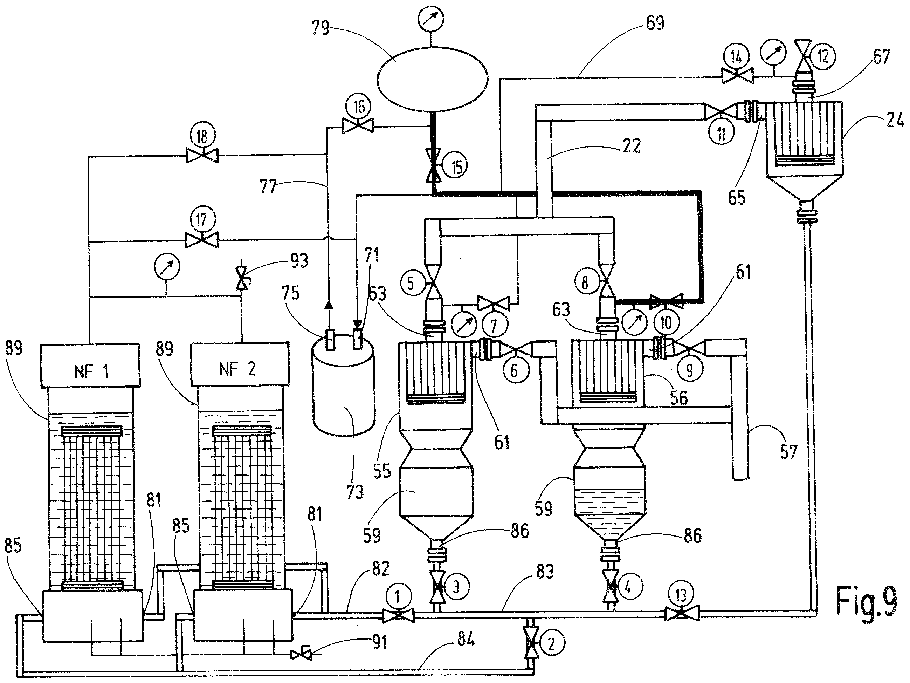

Als nächsten Betriebszustand zeigt die Fig. 9 das Rückspülen des zweiten Vorfilters 56, dessen Aufnahmebehälter 59 bereits mit Öl befüllt ist. Bei diesem Betriebszustand ist jetzt der erste Vorfilter 55 im Filtrationsbetrieb, da das Absperrorgan 6 an der Unfiltratseite 61 und das Absperrorgan 5 an der Filtratseite 63 offen sind. Für den Rückspülvorgang des zweiten Vorfilters 56 ist dessen Absperrorgan 9 an der Unfiltratseite 61 geschlossen, während das Absperrorgan 10 an der Filtratseite 63 offen ist. Für den Rückspülvorgang strömt nunmehr über das Absperrorgan 15 am Druckspeicher 79 aus diesem das Reingas als Rückspülströmung in den zweiten Vorfilter 55 ein.

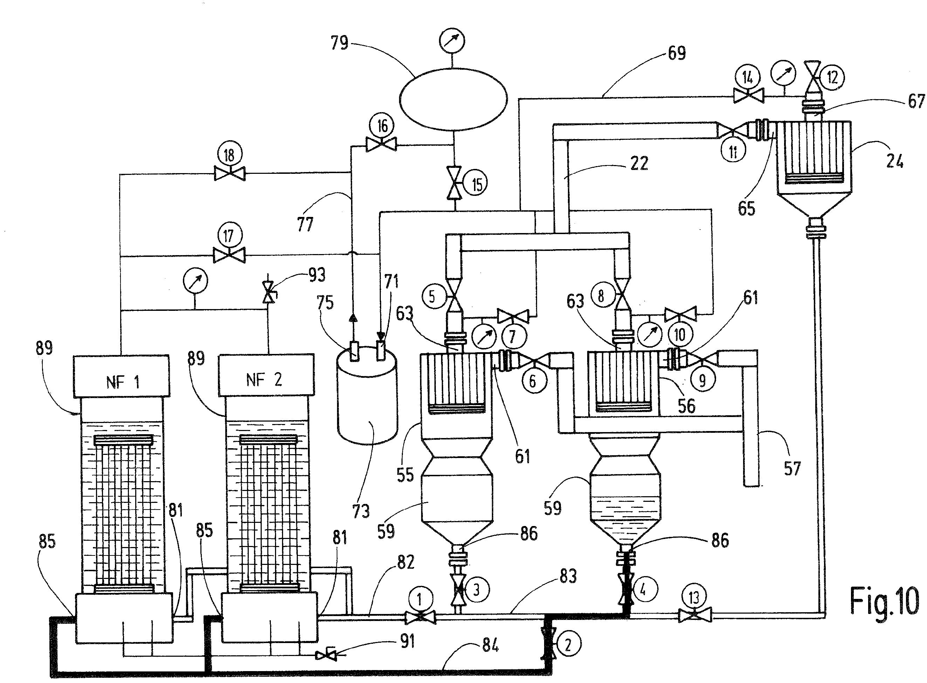

Die Fig. 10 zeigt, in Analogie zum Betriebszustand von Fig. 8, das Entleeren des Aufnahmebehälters 59 des zweiten Vorfilters 56. Bei weiterhin im Filtrationsbetrieb befindlichem ersten Vorfilter 55 sind das Absperrorgan 4 am Aufnahmebehälter 59 des zweiten Vorfilters 56 sowie das Absperrorgan 2 an der Verbindungsleitung 83 offen, so dass der bei der Rückspülung aufgebaute Druck im zweiten Vorfilter 56 die Ölfüllung des Aufnahmebehälters 59 zu den Ölfiltern NF1, NF2 zurückdrückt und der Aufnahmebehälter 59 von dem Öl entleert wird, das die beim Rückspülvorgang abgereinigten Partikel enthält.

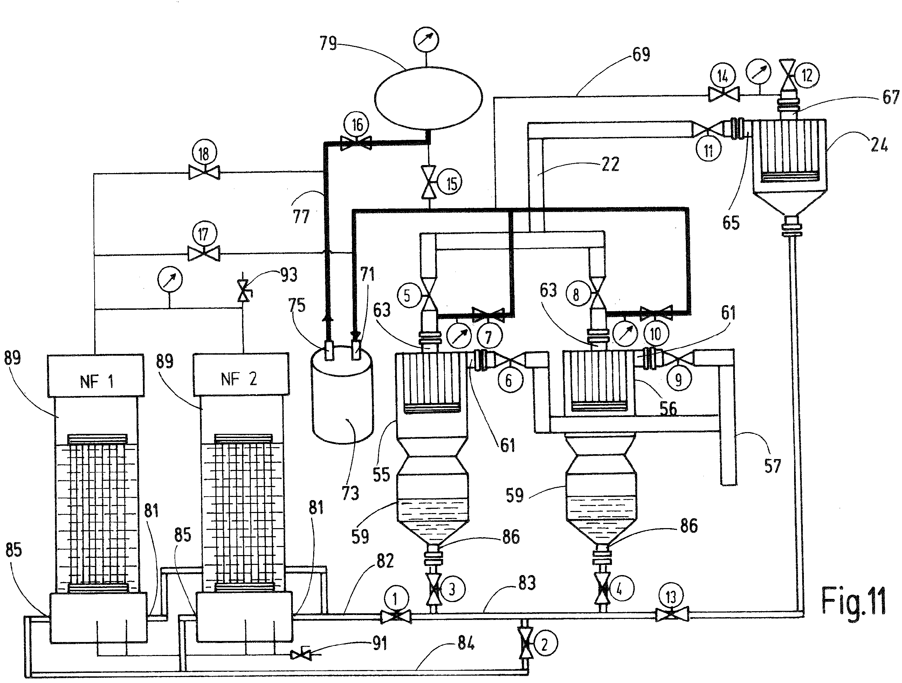

Der in Fig. 11 gezeigte Betriebszustand dient der Vorbereitung des Systems für die Durchführung einer Passivierung beider Vorfilter 55 und 56. Hierfür wird in den Gehäusen der Vorfilter 55, 56 ein Unterdruck aufgebaut. Hierfür wird die Druckseite 75 des Kompressors 73 über das geöffnete Absperrorgan 16 mit dem Druckspeicher 79 verbunden, während gleichzeitig die Saugseite 71 des Kompressors 73 über die geöffneten Absperrorgane 7 und 10 mit der Filtratseite 63 der Vorfilter 55 und 56 in Verbindung ist. Bei laufendem Kompressor 73 wird dadurch in den Gehäusen der Vorfilter 55, 56 ein Unterdruck erzeugt.

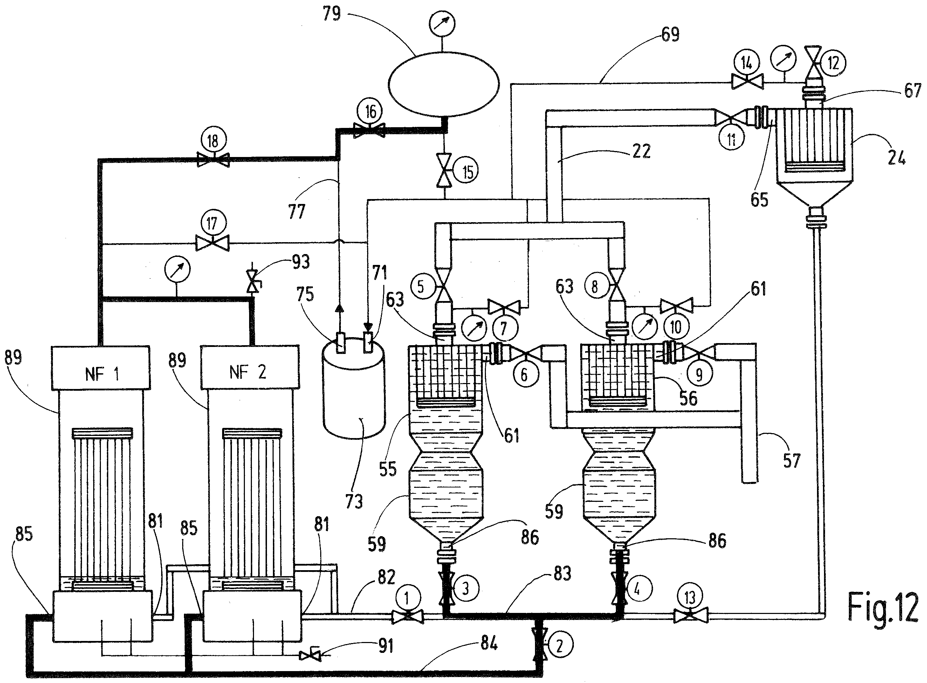

Ausgehend von diesem Zustand zeigt die Fig. 12 die Passivierung der Vorfilter 55, 56. Bei weiterhin geöffneten Absperrorganen 2, 3 und 4 werden das Absperrorgan 16 am Druckspeicher 79 und das den Gehäusen der Ölfilter NF1, NF2 zugeordnete Absperrorgan 18 geöffnet. Bei in den Gehäusen der Vorfilter 55, 56 herrschendem Unterdruck wird dadurch die Ölfüllung aus den Ölfiltern NF1 und NF2 ausgezogen und in die Vorfilter 55, 56 eingeschoben, so dass nicht nur deren Aufnahmebehälter 59, sondern auch die Filtergehäuse mit dem Filtermaterial von dem inertisierenden respektive passivierenden Weißöl befüllt sind.

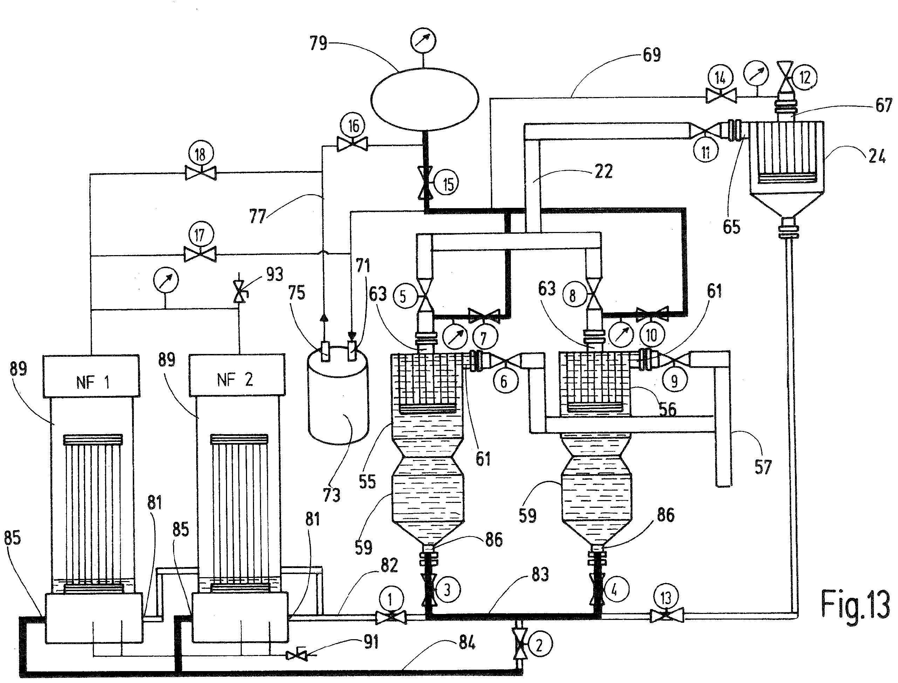

Die Fig. 13 zeigt den Zustand der Entleerung der Vorfilter 55 und 56 nach der Passivierung. Hierfür sind die Filtratseiten 63 der Vorfilter 55, 56 über ihre geöffneten Absperrorgane 7 und 10 und das geöffnete Absperrorgan 15 mit dem Druckspeicher 79 in Verbindung, so dass die Gehäuse der Vorfilter 55, 56 mit dem Speicherdruck beaufschlagt sind. Bei geöffneten Absperrorganen 2, 3 und 4 wird dadurch die Füllung der Vorfilter 55, 56 in das Gehäuse der Ölfilter NF1 und NF2 zurückgedrückt.

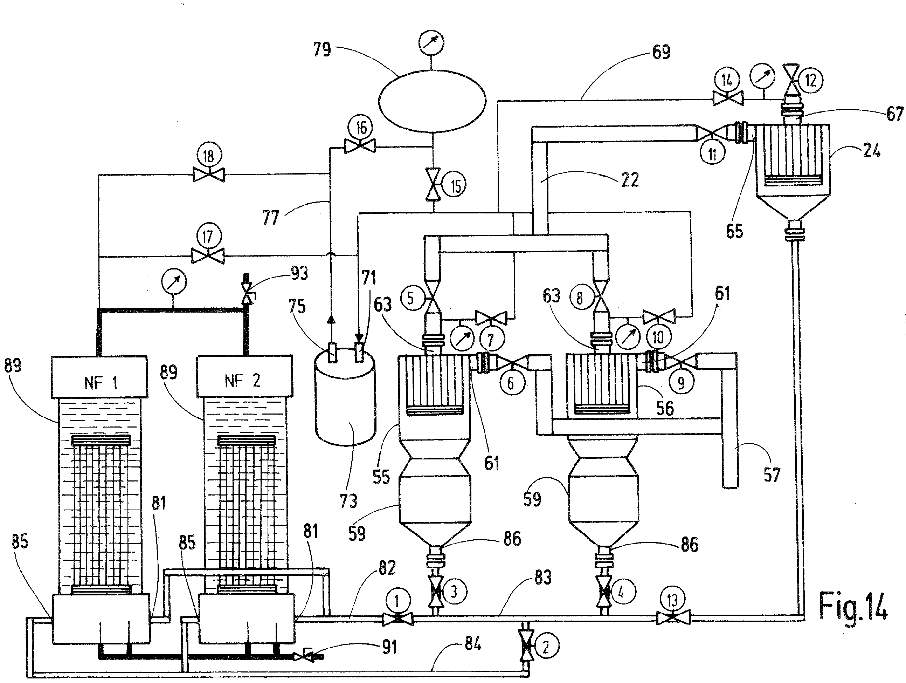

Die Fig. 14 zeigt schließlich den Zustand der Entsorgung der beim Betrieb der Vorfilter 55 und 56 abgereinigten Partikel. Diese befinden sich, vom respektive passivierenden Weißöl eingeschlossen, in den Ölfiltern NF1, NF2, die nach Abschluss der Passivierung wieder befüllt sind. Zur Entleerung werden das Ablassventil 91 sowie ein mit den Gehäusen 89 der Ölfilter NF1, NF2 verbundenes Belüftungsventil 93 geöffnet. Aufgrund der Passivierung der Partikel durch den Einschluss in Weißöl können verbrauchte Filterelemente der Ölfilter NF1, NF2 nun zur Entsorgung, ohne dass die Gefahr einer kritischen, oxydativen Reaktion der Partikel besteht, gehandhabt werden.

## Patentansprüche

1. Filtervorrichtung zur Filtration von mit Partikeln belasteten Gasen, wie von Schweißgasen, die insbesondere bei Fertigungsverfahren unter Einsatz von 3D-Druckern in einem Fertigungsraum (52) entstehen, mit einem Filterkreislauf mit mindestens einem Gasfilter (55, 56), das die Partikel aus dem Gas herausfiltert, die zumindest teilweise von diesem Gasfilter (55, 56) in einen zuordenbaren Aufnahmebehälter (59) gelangen, wobei die Partikel im Rahmen eines Rückspülvorganges in den Aufnahmebehälter (59) gelangen, wobei mindestens ein weiterer Filterkreislauf mit mindestens einem Ölfilter (NF1, NF2) vorhanden ist, der ein Öl filtert, das die aus dem Rückspülvorgang gewonnenen Partikel aufweist, und wobei das mit den Partikeln des Gasfilters (55, 56) verunreinigte Öl auf die Unfiltratseite (85) des Ölfilters (NF1, NF2) bringbar ist, **dadurch gekennzeichnet, dass** abgereinigtes Öl von der Filtratseite (81) des Ölfilters (NF1, NF2) in den Gasfilter (55, 56) bringbar ist.

2. Filtervorrichtung nach Anspruch 1, **dadurch gekennzeichnet, dass** für den Rückspülvorgang zumindest ein Druckspeicher (79) vorhanden ist, der mittels einer Kompressoreinrichtung (73) mit Gas vorgebbaren Druckes aufladbar ist, das von der Reinseite (67) eines Versorgungskreises für den Fertigungsraum (52) stammt und das in Umkehr zu der üblichen Filtrationsrichtung die Rückspülung am jeweiligen Gasfilter (55, 56) veranlasst.

3. Filtervorrichtung nach Anspruch 1 oder 2, **dadurch gekennzeichnet, dass** an den Versorgungskreis für den Fertigungsraum mindestens ein Hauptfilter (24) angeschlossen ist, der mit seiner Filtratseite (67) die Reinseite am Eingang (42) des Fertigungsraumes (52) versorgt und der mit seiner Unfiltratseite (65) an die Filtratseite (63) des Gasfilters (55, 56) angeschlossen ist.

4. Filtervorrichtung nach Anspruch 2 oder 3, **dadurch gekennzeichnet, dass** für eine Passivierung des Aufnahmebehälters (59) und vorzugsweise des Gasfilters (55, 56) Druck aus dem Druckspeicher (79) auf den Ölfilter (NF1, NF2) ausgeübt ist, dessen von den Partikeln abgereinigtes Fluid zumindest in den Aufnahmebehälter (59) und vorzugsweise in ein Filtergehäuse des Gasfilters (55, 56) gelangt.

5. Filtervorrichtung nach Anspruch 4, **dadurch gekennzeichnet, dass** für eine Befüllung des Aufnahmebehälters (59) und vorzugsweise eines Filtergehäuses eines der Gasfilter (55, 56) mit Fluid mittels der Kompressoreinrichtung (73) ein Vakuum an diese Komponenten angelegt ist.

6. Filtervorrichtung nach einem der Ansprüche 3 bis 5, der die Merkmale des Anspruchs 3 aufweist, **dadurch gekennzeichnet, dass** zwei der Gasfilter (55, 56) mit dem jeweils zugehörigen Aufnahmebehälter (59) als Vorfilter vor dem Hauptfilter (24) angeordnet sind, die mit ihrer Unfiltratseite (61) an die Schmutzseite (23, 57) des Versorgungskreises anschließbar sind, und dass zwei Ölfilter (NF1, NF2) gemeinsam an einen der Gasfilter (55, 56) anschließbar sind.

7. Filtervorrichtung nach einem der vorstehenden Ansprüche, **dadurch gekennzeichnet, dass** für einen Austausch eines Filterelements eines der Gasfilter (55, 56) dessen Öl aus einem zugehörigen Filtergehäuse abführbar ist.

8. Filtervorrichtung nach einem der Ansprüche 3 bis 7, der die Merkmale des Anspruchs 3 aufweist, **dadurch gekennzeichnet, dass** in den Versorgungskreis für den Fertigungsraum (52) eine Gebläsepumpe (28) nach dem Hauptfilter (24) geschaltet ist sowie dieser Pumpe nachfolgend ein Gaskühler (30), und dass eine Versorgungseinrichtung (34) vorhanden ist, die das Gas, vorzugsweise in Form eines Schutzgases, wie Stickstoff oder Argon, in den Versorgungskreis einspeist.

## Claims

1. Filter device for the filtration of gases contaminated with particles, such as welding gases, which arise in particular in manufacturing processes using 3D printers in a production area (52), having a filter circuit having at least one gas filter (55, 56), which filters the particles from the gas, at least some of said particles passing from this gas filter (55, 56) into an assignable receptacle (59), wherein the particles pass into the receptacle (59) as part of a backwashing process, wherein at least one further filter circuit, having at least one oil filter (NF1, NF2), is provided, said oil filter filtering an oil that comprises the particles obtained from the backwashing process, and wherein the oil contaminated with the particles from the gas filter (55, 56) can be passed to the unfiltered medium side (85) of the oil filter (NF1, NF2), **characterised in that** cleaned oil from the filtrate side (81) of the oil filter (NF1, NF2) can be passed into the gas filter (55, 56).

2. Filter device according to claim 1, **characterised in that** at least one pressure accumulator (79) is provided for the backwashing process, said pressure accumulator being able to be pressurised with a gas at a pressure that can be predetermined by means of a compressor device (73), said gas originating from the clean side (67) of a supply circuit for the production area (52) and causing backwashing at the respective gas filter (55, 56) in a reversal of the usual filtration direction.

3. Filter device according to either claim 1 or claim 2, **characterised in that** at least one main filter (24) is connected to the supply circuit for the production area, the filtrate side (67) of said main filter supplying the clean side at the inlet (42) to the production area (52) and the unfiltered medium side (65) of said main filter being connected to the filtrate side (63) of the gas filter (55, 56).

4. Filter device according to either claim 2 or claim 3, **characterised in that**, in order to passivate the receptacle (59) and preferably the gas filter (55, 56), pressure from the pressure accumulator (79) is applied to the oil filter (NF1, NF2), the fluid from said filter, which has been cleaned of particles, passing at least into the receptacle (59) and preferably into a filter housing of the gas filter (55, 56).

5. Filter device according to claim 4, **characterised in that**, in order to fill the receptacle (59) and preferably a filter housing of one of the gas filters (55, 56) with fluid, a vacuum is applied to these components by means of the compressor device (73).

6. Filter device according to any of claims 3 to 5 having the features of claim 3, **characterised in that** two of the gas filters (55, 56) having the respective assigned receptacle (59) are arranged as pre-filters upstream of the main filter (24), the unfiltered side (61) of said gas filters being able to be connected to the dirty side (23, 57) of the supply circuit, and **in that** two oil filters (NF1, NF2) can be connected together to one of the gas filters (55, 56).

7. Filter device according to any of the preceding claims, **characterised in that**, in order to replace a filter element of one of the gas filters (55, 56), the oil from said filter element can be discharged from an associated filter housing.

8. Filter device according to any of claims 3 to 7 having the features of claim 3, **characterised in that** a blower pump (28) is installed in the supply circuit for the production area (52) downstream of the main filter (24) and a gas cooler (30) is installed downstream of this pump, and **in that** a supply device (34) is provided which feeds the gas, preferably in the form of an inert gas, such as nitrogen or argon, into the supply circuit.

## Revendications

1. Dispositif de filtration, pour la filtration de gaz chargé de particules, comme des gaz de soudure, qui se créent en particulier dans des procédés de fabrication avec utilisation d'imprimantes en 3D, dans un espace (52) de fabrication, comprenant un circuit de filtration ayant au moins un filtre (55, 56) de gaz, qui sépare les particules du gaz par filtration, lesquelles parviennent au moins en partie de ce filtre (55, 56) de gaz dans un récipient (59) de réception pouvant être associé, dans lequel les particules arrivent, dans le cadre d'une opération de lavage en retour, dans le récipient (59) de réception, dans lequel il y a au moins un autre circuit de filtration comprenant au moins un filtre (NF1, NF2) d'huile, qui filtre une huile, qui a les particules obtenues dans l'opération de lavage en retour, et dans lequel l'huile polluée par les particules du filtre (55,56) de gaz peut être apportée au côté (85) de non-filtrat du filtre (NF1, NF2) d'huile caractétisé **en ce que** l'huile épurée peut être apportée, du côté (81) de filtrat, du filtre (NF1,NF2) d'huile, au filtre (55,56) de gaz.

2. Dispositif de filtration, suivant la revendication 1, **caractérisé, en ce qu'**il y a, pour l'opération de lavage en retour, au moins un accumulateur (79) de pression qui, au moyen d'un dispositif (73) de compresseur, peut être chargé de gaz d'une pression pouvant être donnée à l'avance, qui provient du côté (67) propre d'un circuit d'alimentation de l'espace (52) de fabrication et qui provoque, dans le sens contraire au sens de filtration habituel, le lavage en retour du filtre (55,56) de gaz respectif.

3. Dispositif de filtration suivant la revendication 1 ou 2, **caractérisé en ce qu'**au circuit d'alimentation de l'espace de fabrication est raccordé au moins un filtre (24) principal, qui alimente par son côté (67) de filtrat, le côté propre à l'entrée (42) de l'espace (52) de fabrication, et qui est raccordé par son côté (65) de non-filtrat, au côté (63) de filtrat du filtre (55, 56) de gaz.

4. Dispositif de filtration suivant la revendication 2 ou 3, **caractérisé en ce que** pour une passivation du récipient (59) de réception et, de préférence, du filtre (55,56) de gaz, une pression est appliquée de l'accumulateur (79) de pression au filtre (NF1, NF2) d'huile, dont le fluide épuré de particules parvient au moins dans le récipient (59) de réception et, de préférence, dans une enveloppe du filtre (55, 56) de gaz.

5. Dispositif de filtration suivant la revendication 4, **caractérisé en ce que** pour remplir de fluide le récipient (59) de réception et, de préférence, l'enveloppe de l'un des filtres (55, 56) de gaz, un liquide est appliqué à ces composants au moyen du dispositif (73) de compresseur.

6. Dispositif de filtration suivant l'une des revendications 3 à 5, qui a les caractéristiques de la revendication 3, **caractérisé en ce que** deux des filtres (55, 56) de gaz sont, avec le récipient (59) de réception leur appartenant respectivement, montés comme préfiltres avant le filtre(24) principal, lesquels peuvent être raccordés, par leur côté (61) de non-filtrat, au côté (23,57) impur du circuit d'alimentation, et **en ce que** deux filtres (NF1, NF2) d'huile peuvent être raccordés conjointement à l'un des filtres (55, 56) de gaz.

7. Dispositif de filtration suivant l'une des revendications précédentes, **caractérisé en ce que**, pour un remplacement d'un élément de l'un des filtres (55, 56) de gaz, son huile peut être évacuée d'une enveloppe de filtres lui appartenant.

8. Dispositif de filtration suivant l'une des revendications 3 à 7, qui a les caractéristiques de la revendication 3, **caractérisé en ce qu'**une pompe (28) soufflante peut être montée dans le circuit d'alimentation de l'espace (52) de fabrication, en aval du filtre (24) principal, ainsi qu'à la suite de cette pompe, un refroidisseur (30) de gaz, et **en ce qu'**il y a un dispositif (34) d'alimentation, qui envoie le gaz, de préférence sous la forme d'un gaz de protection, comme de l'azote ou de l'argon, dans le circuit d'alimentation.
